# EUROPEAN PATENT SPECIFICATION

(11) **EP 0 575 201 B1**
(45) Date of publication and mention of the grant of the patent: **19.05.1999**
(21) Application number: 93304809.2
(22) Date of filing: 18.06.1993
(51) Int. Cl.: H04N 7/24

(54) **Coding and decoding**
Kodierung und Dekodierung
Codage et décodage

(30) Priority: 18.06.1992 KR 1061492
(43) Date of publication of application: 22.12.1993
(73) Proprietor: SAMSUNG ELECTRONICS CO., LTD., Suwon-city, Kyungki-do 441-373 (KR)
(72) Inventor: Jeong, Je-Chang, Seochogu, Seoul (KR)
(74) Representative: Stanley, David William

(56) References cited:
- EP-A- 0 444 839
- EP-A- 0 534 282
- WO-A-93/18615
- CCITT SG XV WP/1 SPECIALIST GROUP ON CODING FOR VISUAL TELEPHONY, 12 September 1986, DOCUMENT #141, pages 1 - 14 'Specification for Reference Model Version 2 (RM2)'
- PROCEEDINGS OF THE NATIONAL COMMUNICATIONS FORUM, vol.42, no.2, 30 September 1988, OAK BROOK, ILLINOIS US pages 1678 - 1682 H.GHARAVI 'Low bit rate television on ISDN'
- TRANSACTIONS OF THE INSTITUTE OF ELECTRONICS AND COMMUNICATION ENGINEERS OF JAPAN, SECTION E, vol.74, no.9, September 1991, TOKYO JP pages 2513 - 2522 T.SAITO ET AL. 'Multi-Dimensional Lossy Coding via Copying with its Practical Application to Interframe Low-Rate Video Compression'
- ELECTRONICS LETTERS, vol.27, no.18, 29 August 1991, ENAGE GB pages 1674 - 1676 S.H.JANG ET AL. 'Backward Predictive Block Matching Algorithm for Low Bit Rate Video Coding'

## Description

The present invention relates to coding and decoding digital video data.

Recently, a coding and decoding system has been used in sending and receiving a video and audio signal. The coding system codes the video and audio signal into digital data, which is stored in some memory or transmitted to a receiving counterpart. Then the decoding system decodes the coded digital data so as to reconstruct it into the original signal. There have been DPCM (Differential Pulse Code Modulation), Vector Quantizer, and Variable Length Coding utilized in such methods for coding a video and audio signal. The methods are used for removing redundancy data included in the signals to be coded, thus compressing the whole data.

As a background to the present invention, a description will be given of coding and decoding of a video signal. Generally, in order to code the video signal, each frame is divided into predetermined blocks, and either each block of data or differential data between the predetermined blocks is transformed by some orthogonal transformation, thereby transforming the video data into transformation coefficients in the frequency domain. There are DCT (Discrete Cosine Transform), WHT (Walsh-Hadamard Transform), DFT (Discrete Fourier Transform), and DST (Discrete Sine Transform) methods of the above type. The transformation coefficients which are obtained by these transformation methods are changed into predetermined representative values. The transmitting data are compressed according to being coded in consideration of the statistical characteristic of the representative values.

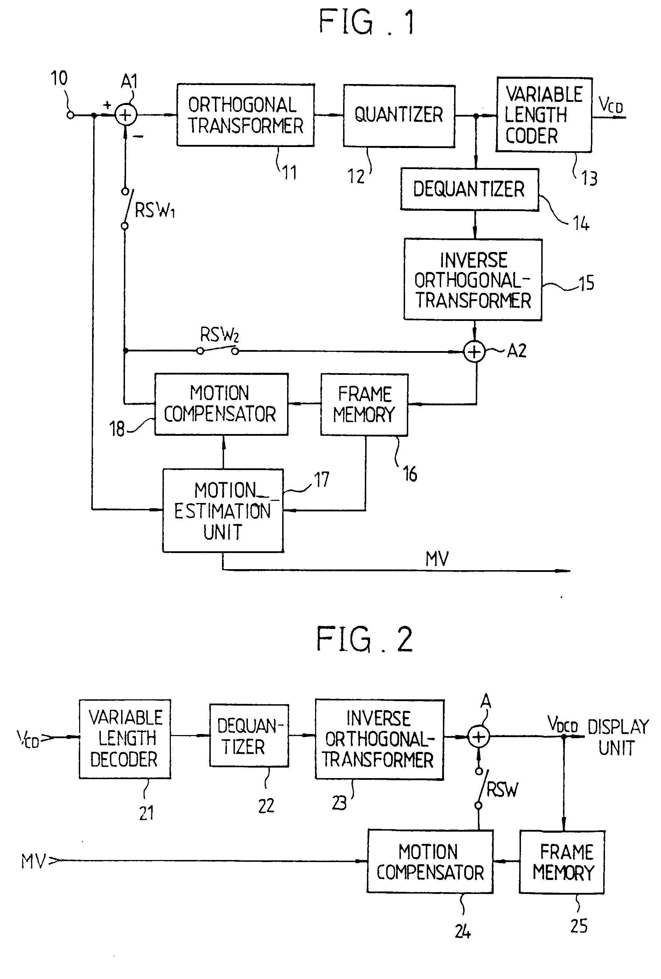

Reference will now be made to Figures 1 and 2 of the accompanying diagrammatic drawings, in which:
Figure 1 is a block diagram showing an example of a conventional coder of video data; and
Figure 2 is a block diagram showing an example of a conventional decoder of video data.

Figure 1 schematically shows a general coder of video data. The coder of Figure 1 comprises means for transforming input video data by a DCT method and quantizing the transformation coefficients; means for compressing the data according to coding of the quantized data by variable length coding; means for dequantizing and inverse-transforming the quantized data, thereby closely reconstructing the original data before DCT transformation; means for reconstructing frame data with the reconstructed block data; and means for performing motion estimation and motion compensation from the reconstructed frame data and a present block data for coding.

Video data of "NxN" (which is generally represented as "N1xN2", and which for the convenience of explanation, is assumed as "N1=N2=N" of unit pixels) are input via input terminal 10, and block video data and feedback video data are used for calculating differential data by a first adder A1. The differential data are transformed into transformation coefficients in the frequency domain by a DCT method in orthogonal transformer 11. Then, the energy components of transformation coefficients are gathered to low frequency. A quantizer 12 changes the transformation coefficients into the representative values which have a predetermined level, taking the energy level distribution of the transformation coefficients into consideration. A variable length coder 13 further compresses the transmitting data (VcD) by variable-length-coding the representative values in consideration of the statistical characteristics of the representative values.

Generally, there are many similar portions between a certain frame and its following or previous frame. Thus, in the case of a frame which has slight motion, a motion vector (MV) is calculated by estimating the motion. The block data are compensated using the motion vector (MV) to make the differential data small, and thus the transmitting data can be further compressed. To perform such motion compensation, a dequantizer 14 and an inverse orthogonal transformer 15 dequantize and inverse-transform the quantization coefficients output from quantizer 12, thereby transforming into video data of spatial domain. The inverse-transformed video data are reconstructed differential data corresponding to the differential data output from the first adder A1. The differential data output from the inverse orthogonal transformer 15 are added with feedback block data by the second adder A2 and stored in a frame memory 16, the frame data thereby being reconstructed. A motion estimation unit 17 searches the most similar block data in pattern with NxN data input via the input terminal 10 from the frame data which are stored in the frame memory 16, and then calculates the motion vector (MV) representing motion between two blocks. The motion vector (MV) is transmitted to a receiver in order to be used in a decoding system, and to a motion compensator 18, connected to frame memory 16 and motion estimation unit 17. The motion compensator 18 reads the NxN block from the frame data of the frame memory 16 according to the motion vector (MV) supplied from the motion estimation unit 17, and supplies them to the first adder A 1. As described, the first adder A1 calculates the differential data between NxN block data supplied from the input terminal 10 and similar NxN block data in pattern supplied from the motion compensator 18. The differential data are coded and transmitted to the receiver. Referring to Figure 1, two switches RSW1, RSW2 refresh the video data to be coded in units of a frame or blocks to prevent the accumulation of errors. That is, when refresh switches RSW1, RSW2 are turned on, the DPCM process is performed, while when switches are turned off, the PCM data are output by the first and second adders A1, A2.

The coded video data (VcD) are transmitted to the receiver and input to a decoder as shown in Figure 2. The coded video data (VCD) are decoded through an inverse process of variable length coding in a variable length decoder 21. The data output from the variable length decoder 21 are dequantized to transformation coefficients in the frequency domain by a dequantizer 22. An inverse orthogonal-transformer 23 transforms the transformation coefficients in the frequency domain supplied from the dequantizer 22, into video data of the spatial domain. Then, the inverse-transformed video data are reconstructed the differential data corresponding to the differential data calculated from the first adder A1 of coder. The motion vector (MV) in which is calculated and transmitted from the motion estimation unit 17 of coder, is supplied to a motion compensator 24 of decoder. The motion compensator 24 reads NxN data according to the motion vector (MV) from frame data which are stored in a frame memory 25, and supplies them to the adder A. Then, the inverse-transformed differential data and the NxN data supplied from the motion compensator 24 are combined by the adder A and transmitted to a display unit.

Accordingly, the coder and decoder are apparatuses for processing an active image by a DPCM method of motion compensation. In the case that a frame for coding is a still image or an active image which is coded by intra frame coding, a part of the above coder and decoder, this is, orthogonal transformer 11, quantizer 12 and variable length coder 13 in the coder, and variable length decoder 21, dequantizer 22 and inverse orthogonal transformer 23 in the decoder, are enough to perform the operation of coding and decoding. For example, an electronic camera which uses a disk or a memory IC instead of a conventional film, or a device for recording a still image in computer, utilizes the coder and decoder comprising the above operation units. In the case of a still image, there exist similar blocks in pattern among blocks of a frame. For instance, in the case where the sky or the sea appears in the background of a frame, a plurality of adjacent blocks to it have similar data in pattern.

CCITT SG XV WP/1 Specialist Group on Coding for Visual Telephony, 12 September 1996, Document 1414, pages 1 to 4 is a discussion document on a coding method, known as reference model version 2 (RM2). This coding method concerns principally the coding of moving pictures and making decisions between intra/inter mode coding. The method performs correlation between blocks by means of conventional motion estimation techniques and includes a means for searching within a given search area around an input block to check for similarities between a presently input block and previously as well as future input blocks.

However, since a conventional coder and decoder do not utilize such correlations among blocks as described above, concerning still images, there has been a limitation in compressing transmitting data.

Preferred embodiments of the present invention aim to provide a coding method with block DPCM for further compressing transmitting data by performing a DPCM process among similar blocks in data pattern in consideration of intra frame correlations among blocks, in either a still image or an active image which is coded by intra frame coding.

Another aim is to provide a method for decoding video data coded by a coding method including block DPCM in consideration of correlations among blocks of intra frame, in a still image or active image which is coded by intra frame coding.

According to a first aspect of the invention, there is provided a coding method for dividing a frame into a plurality of blocks and coding data of the blocks, with coding of still image data or active image data in an intra frame mode, the method characterized by the steps of: determining a predetermined search area among a number of already received blocks around a present block in reconstructed frame data of a present frame; estimating which block of said number of blocks in said search area is most similar in pattern to said present block and calculating displacement data representing a displacement between the present block and the most similar block; reading data of said similar pattern block from the reconstructed frame data according to said calculated displacement; calculating differential data of said present block and said similar pattern block; comparing an energy level of said differential data with an energy level of data of said present block and outputting mode data according to a coding mode set as a result of the comparison, the coding mode being set to a PCM mode if the energy level of said differential data is greater than the energy level of the data of said present block and being set to a DPCM mode if the energy level of said differential data is less than the energy level of the data of said present block; coding one of said present block data and said differential data according to said set mode; reconstructing said coded data; and reconstructing said frame data by storing in regular sequence the block data obtained from said coded data at said reconstructing step and said similar pattern block data.

Preferably, if the coding mode is set to the DPCM mode, the determined mode data and the calculated displacement data are combined at said displacement calculating step into a data pack.

Preferably, said search area determining step determines the search area which is composed of blocks being closely adjacent to a present block among previously coded blocks in frame data.

Said present block data is preferably coded in the case that said PCM mode is determined at said mode determining step, and said differential data is coded in the case that said DPCM mode is determined at said mode determining step.

Preferably, said step for reconstructing said frame data reconstructs the frame data by storing blocks sequentially when said PCM mode is determined at said mode determining step, or by storing data obtained by adding said differential data and said similar pattern block data when said DPCM mode is determined at said mode determining step.

In embodiments of the invention a decoding method is provided for decoding data which has been selectively coded with PCM or block DPCM in a still image or active image in an intra frame mode, the decoding method comprising the steps of: receiving transmitted data coded by a method according to the first aspect; decoding said transmitted data to data of the spatial domain; separating said transmitted coded data into mode data and displacement data; reading the block data corresponding to said displacement data from the frame data obtained by a predetermined reconstructing step; and reconstructing said frame data by sequentially storing the block data obtained from calculation of said decoded transmitted data and said read block data according to whether said mode data indicates that a given block has been coded by PCM or DPCM.

Preferably, in said step for separating said mode data, predetermined PCM mode data are output when said transmitted data are coded data of a block, and predetermined DPCM mode data are output when said transmitted data are differential data between a present block and a similar pattern block.

Preferably, in a step for calculation according to said mode data, said decoded transmitted data are output when said mode data is said PCM mode and said decoded transmitted data and the block data read from said frame data are added and output when said mode data is said DPCM mode.

According to a second aspect of the invention, there is provided a coder for dividing a frame into a plurality of blocks and coding data of the blocks, with coding of a still image or an active image in an intra frame mode, the coder being characterized by : a memory for storing data in units of blocks, to thereby enable reconstruction of a present frame of data; means for determining a predetermined search area in said present frame of data; means for receiving present block data to be coded, estimating a most similar pattern block with a present block from previously input blocks within said search area of said present frame of data, and calculating a displacement obtained by said estimation; a displacement compensation means for reading data of said similar pattern block data from said memory according to the displacement supplied from said displacement estimation means; means for calculating differential data between said present block data for coding and the block data output from said displacement compensation means; means for determining a coding mode of transmitting data by comparing an energy level of said present block data with an energy level of said differential data, setting the coding mode to be a PCM mode if the energy level of said differential data is greater than the energy level of said present block data and setting the coding mode to a DPCM mode if the energy level of said differential data is less than the energy level of said present block data and outputting the determined mode data; means for selecting one of said present block data and said differential data according to the mode data from said mode determining means, and coding the selected one; means for reconstructing data output from said coder into an original state before coding; and a second adder for supplying the output data from said reconstructing means, or data which are the result of adding the output data from said reconstructing means and the output data from said displacement compensation means, to said memory in accordance with whether the mode determined by said mode determining means indicates that a block has been coded with PCM or DPCM.

Preferably, said search area determining means determines a search area which is composed of blocks adjacent to a present block among previously coded blocks in the frame data which are stored in said memory as a search area.

Preferably, there is provided at which said present block data for coding are applied to an input terminal and an output terminal is connected to an input terminal of coding means; and a first switch which is turned on or off according to the output signal of said mode determining means, of which one terminal is connected to the output terminal of said displacement compensation means, and the other is connected to another input terminal of said first adder.

Preferably, said first switch is turned off when the output signal of said mode determining means is the PCM mode data, and turned on when it is the DPCM mode data.

Preferably, the coder further comprises second switch which is turned on or off according to the output signal of said mode determining means, of which one terminal is connected to the output terminal of said displacement compensation means, and the other is connected to an input terminal of said second adder.

Preferably, the second switch is turned off when the output signal of said mode determining means is the PCM mode data, and turned on when it is the DPCM mode data.

Preferably, the device further comprises a mode-displacement data combiner which combines the mode data output from said mode determining means with displacement data output from said displacement estimation means and sends mode-displacement data to a transmission channel.

In embodiments of the invention, there is provided a device for decoding data coded by block DPCM with a still image or active image in an intra frame mode, the decoder comprising: an input terminal for receiving data coded by a coder according to the second aspect; means for reconstructing the data applied from said input terminal to data of the spatial domain; means for separating transmitting data of the coder into mode data and displacement data, and outputting the same; a memory for storing previously decoded block data in a regular sequence and reconstructing the frame data; a displacement compensation means for reading the block data corresponding to said displacement data from the frame data of said memory; and an adder for selectively adding the output data from said displacement compensation means, to the output data of said reconstructing means according to said mode data, and outputting the same to said memory.

Preferably, said mode-displacement data separator outputs predetermined PCM mode data when said reconstructed data are obtained from data which code a block in said coder, and predetermined DPCM mode data when said reconstructed data are obtained from differential data between block data and data of a block with a most similar pattern.

The decoder may further comprise a switch which is turned on or off according to said mode data, of which one terminal is connected to an output terminal of said displacement compensation means and the other is connected to an input terminal of said adder.

Said switch is preferably turned off when an output signal of said mode-displacement separator is the PCM mode data, and turned on when it is the DPCM mode data.

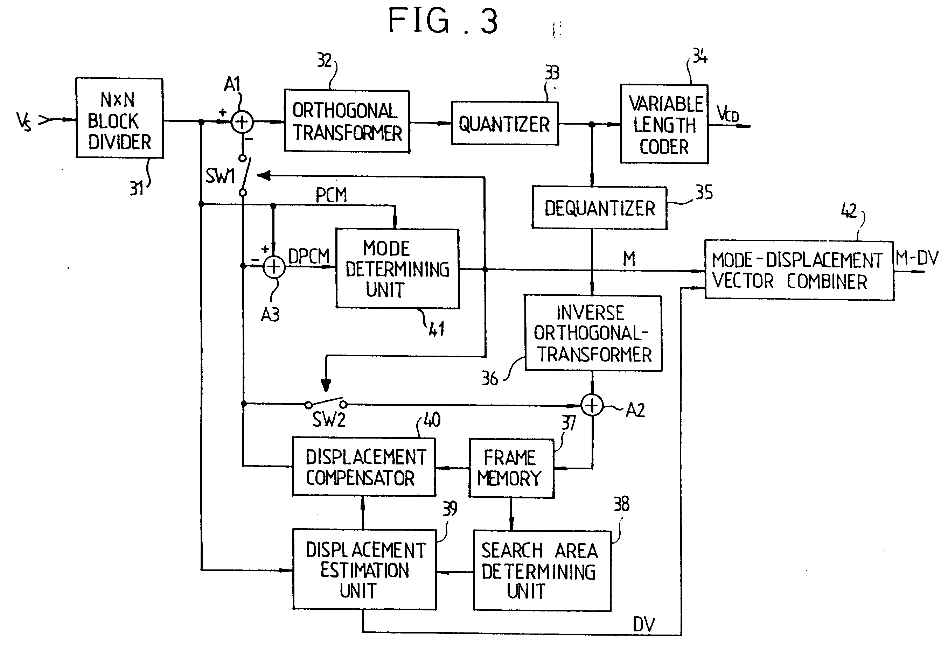

For a better understanding of the invention, and to show how the same may be carried into effect, reference will now be made, by way of example, to Figures 3 to 6 of the accompanying diagrammatic drawings, in which:

The objects and features of the present invention will be become more apparent from the consideration of the following detailed description taken in conjunction with the accompanying drawings in which:
Figure 3 is a block diagram showing one example of a preferred embodiment of a coder with block DPCM in accordance with the present invention;

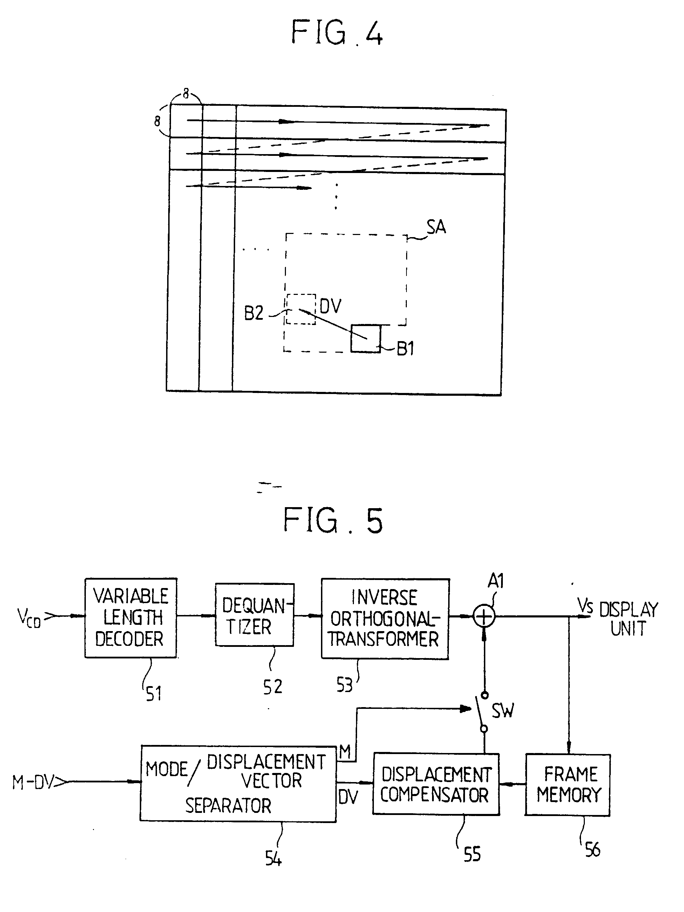

Figure 4 is a schematic diagram explaining part of an operation in the coder of Figure 3;
Figure 5 is a block diagram showing one example of a preferred embodiment of a decoder with block DPCM according to the present invention.

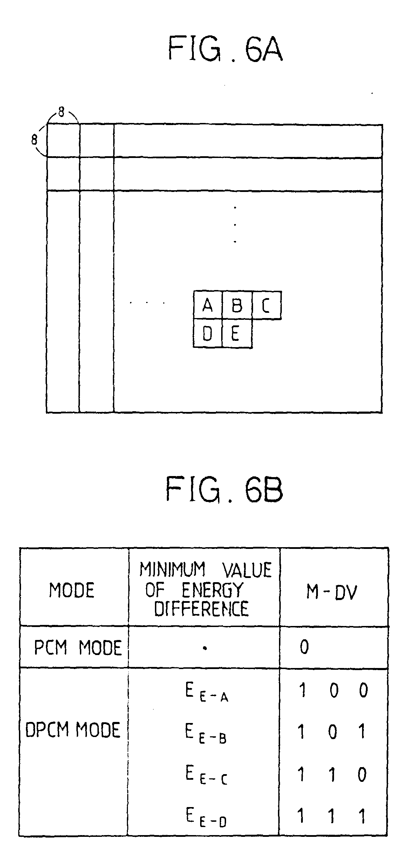

Figure 6 is a schematic diagram showing another preferred embodiment related to Figure 4.

The coder of Figure 3 comprises a block divider 31 for dividing the video data of a frame into blocks of size NxN; orthogonal transformer 32 for transforming input block data; a quantizer 33 for quantizing transformation coefficients; a variable length coder 34 for rendering the quantization coefficients a variable length coding; a dequantizer 35 for dequantizing the quantization coefficients output from the quantizer 33; an inverse orthogonal-transformer 36 for transforming the dequantized transformation coefficients into data of spatial domain; a frame memory 37 for storing reconstructed frame data; a search area determining unit 38 for determining a search area in the frame data of the frame memory; a displacement estimation unit 39 for estimating relative position of the most similar block in pattern against a present block to be coded within a predetermined search area, and calculating a displacement vector (DV); a displacement compensator 40 for reading a corresponding block from the frame memory 37 according to estimated displacement; an adder A3 for calculating the difference between PCM (Pulse Code Modulation) data of a present block and PCM data output from the displacement compensator 40, and outputting DPCM (Differential Pulse Code Modulation) data; a mode determining unit 41 for determining a predetermined mode according to a result of comparing the PCM data of the present block with the DPCM data output from the adder A3; and a mode-displacement vector combiner 42 for combining the mode data (M) output from the mode determining unit 41 and the displacement vector (DV) supplied from the displacement estimation unit 39.

Referring to Figure 3, in case that the frame data for a still image or an active image which is coded by intra frame coding, are input to block divider 31, the block divider 31 divides the input data into a plurality of blocks. The first adder A1 subtracts feedback block data from the block data supplied from the block divider 31. At this time, the feedback may be the block data or comprise no information. The output data from the first adder A1 are transformed into transformation coefficients in the frequency domain by the orthogonal transformer 32. The transformation coefficients are quantized to predetermined representative values by the quantizer 33, the transmitting data thereafter being further compressed by the variable length coder 34. On the other hand, the quantization data output from the quantizer 33 are reconstructed to video data of the spatial domain by dequantizer 35 and inverse orthogonal-transformer 36 for displacement compensation. The output data of the inverse orthogonal-transformer 36, which corresponds to the output data of the above first adder A1, are added to the feedback data by the second adder A2. Then, the feedback data may be block data or comprise no information, just like the above first adder A1. The block data output from the second adder A2 are transmitted to the frame memory 37, and the frame memory 37 stores sequentially the blocks to reconstruct the frame. The search area determining unit 38 sets a predetermined search area (SA) in the frame data which are stored in the frame memory 37. Then, the search area (SA) is the surrounding area of the present block B 1 to be coded as shown in Figure 4, and is set to previous coded blocks. The displacement estimation unit 39 searches the most similar block B2 in pattern with the present block B1 within the search area set by search area determining unit 38 and estimates a relative position between the block B2 and the present block B1, thereby calculating the displacement vector (DV). At this time, either mean square error or mean absolute error is used in order to calculate the displacement. The displacement compensator 40 reads the block corresponding to the displacement vector (DV) from the frame data which are stored in the frame memory 37, namely, the most similar block B2 in pattern with the present block B1 according to receiving the displacement vector (DV) from the displacement estimation unit 39. The similar block data B2 are subtracted from the PCM data of the present block B1 by the third adder A3, the block DPCM data thereby being output. Moreover, the data output from displacement compensator 40 are applied to the first adder A1 via the first switch (SW1) and to the second adder A2 via the second switch (SW2). Accordingly, the output data from the displacement compensator 40 are transmitted to the first and second adders A1, A2 or cut off. On the other hand, the mode determining unit 41 compares the DPCM data supplied from the third adder A3 with the PCM data of the present block B1 supplied from block divider 31. Then, two data are compared from a viewpoint of the energy level magnitude, thereby the mode corresponding to the data with low energy level being determined. That is, compared with the DPCM data of the third adder A3 and the PCM data of the present block, in the case that the energy level of the PCM data is lower than that of the DPCM data, the mode determining unit 41 determines the PCM mode and outputs "0" as mode data (M). On the other hand, in the case that the energy level of the DPCM data is lower than that of the PCM data, the mode determining unit 41 determines the DPCM mode and outputs "1" as mode data (M). According to the mode data (M) of the mode determining unit 41, the ON/OFF states of the above first and second switches SW1, SW2 are controlled. When the mode data is "0", namely PCM mode, the first and second switches SW1, SW2 are in "OFF" state, thereby feedback data not being supplied to the first and second adders A1, A2. When the mode data is "1", namely DPCM mode, the first and second switches SW1, SW2 are in "ON" state, whereby feedback data is respectively supplied to the first and second adders A1, A2. Also, the mode-displacement vector combiner 42 combines the mode data (M) of the mode determining unit 41 and the displacement vector (DV) of the displacement estimation unit 39, thereby outputting mode-displacement vector data (M-DV). The mode-displacement vector data (M-DV) are differentially constituted data according to each of modes. In the case of PCM mode, the mode-displacement vector data (M-DV) have only mode data (M) of "0", and there exist no displacement data (DV). In the case of DPCM mode, the mode-displacement vector data (M-DV) include the mode data (M) of "1" and the displacement vector (DV) calculated from the displacement estimation unit 39.

Like this, in the coder of Figure 3, the variable length coding unit 34 outputs the PCM data which are coded by variable length coding or the DPCM data according to the mode. Mode-displacement vector combiner 42 outputs the mode-displacement vector data (M-DV) showing a mode state and a displacement vector. The coding data output from the coder are transmitted via transmission channel and applied to the decoder of the receiver.

The decoder of Figure 5 comprises a variable length decoder 51 for variable-length-decoding the video data (VCD) and outputting quantization coefficients; a dequantizer 52 for dequantizing the quantization coefficients; an inverse orthogonal-transformer 53 for inverse-transforming dequantized transformation coefficients to video data of the spatial domain; a mode-displacement vector separator 54 for receiving mode-displacement vector data (M-DV) transmitted from the coder and separating them into the mode data (M) and displacement vector (DV); a displacement compensator 55 for reading corresponding block data from a frame memory 56 according to the input displacement vector (DV); switch (SW) being switched according to the mode data (M); an adder A1 for adding the output data from the inverse-orthogonal transformer 53 and the block data output from the displacement compensator 55, and outputting block data (Vs) corresponding to a still image; and a frame memory 56 for storing the frame reconstructed by the output data from the adder.

The video data coded by the coder are decoded to quantization coefficients by the variable length decoder 51, and the quantization coefficients are transformed into video data of the spatial domain via dequantizer 52 and inverse orthogonal-transformer 53. The mode-displacement vector separator 54 divides the mode-displacement vector data (M-DV) transmitted from the coder into the mode data (M) and the displacement vector (DV). In the case of PCM mode, the mode-displacement vector separator 54 outputs "0" of mode data(M), and there exist no displacement data (DV). The switch (SW), the switching operation of which is controlled according to the mode data (M), is in "OFF" state, whereby the PCM data of block are output from the inverse orthogonal-transformer 53, being stored in the frame memory 56 via adder A1 and being simultaneously transmitted to the display unit. On the other hand, in the case of DPCM mode, the mode-displacement vector separator 54 outputs "1" of mode data (M), and the displacement vector (DV) is calculated from the displacement estimation unit 39 of the above coder as displacement data. The displacement compensator 55 catches the block corresponding to the displacement vector (DV) from the frame data which are stored in the frame memory 56 and supplies this to the adder A1. At this time, since the mode data is "1", the switch SW is in "ON" state, whereby the output data from the displacement compensator 55 is transmitted to the adder A1. The adder A1 combines the DPCM data supplied from the inverse orthogonal transformer 53 with the block data supplied from the displacement compensator 55, and the output is stored in the frame memory 56, and simultaneously transmitted to the display unit.

Figure 6 shows a simple case for obtaining a mode-displacement vector in a reconstructed frame. As shown in Figure 6A, the search area is determined by blocks (A, B, C, D) being closely adjacent to a present block (E) for coding among blocks stored in the frame memory after being coded, whereafter the difference between the block (E) for coding and the adjacent blocks (A, B, C, D) is calculated. As shown in Figure 6 B, the energy level differences of each of blocks (E-A, E-B, E-C, E-D),that is, "E_{E-A}", "E_{E-B}", "E_{E-C}", "E_{E-D}", are respectively calculated. Then, since the blocks closely adjacent to the block (E) for coding are four in number, each of the displacement data can be represented as 2-bit. Figure 6B shows the displacement data to represent the displacement of 2-bit between the block (E) for coding by the DPCM mode and adjacent blocks. The above displacement estimation unit selects the lowest one of the four energy differences (E_{E-A}, E_{E-B}, E_{E-C}, E_{E-D}) and outputs 2-bit displacement data corresponding to the lowest energy level difference. Then, the displacement compensator reads the block data which have the lowest energy level difference to the present block data being coded, from the frame memory according to the displacement data. The mode determining unit compares the PCM data of the present block with the DPCM data, which is difference data between the present block (E) and the most similar block in the viewpoint of energy level, then determines the mode, PCM mode or DPCM mode according to the result of comparison. After whichever mode is determined, the mode data and displacement data are combined and output by the mode-displacement combiner. The mode-displacement data transmitted from the coder have the data format as shown in Figure 6B. In PCM mode, the mode data of "0" is only transmitted. In DPCM mode, the mode data of "1" and displacement data are transmitted.

The above described coding and decoding system for video data embodying the present invention detects a similar block pattern to a present block to be coded in a still image or active image which is coded by intra frame coding, and performs block DPCM in consideration of correlations between two blocks, thereby further compressing the transmitting data.

## Claims

1. A coding method for dividing a frame into a plurality of blocks and coding data of the blocks, with coding of still image data or active image data in an intra frame mode, the coding method characterized by the steps of:
determining a predetermined search area among a number of already received blocks around a present block in reconstructed frame data of a present frame;
estimating which block of said number of blocks in said search area is most similar in pattern to said present block and calculating displacement data representing a displacement between the present block and the most similar block;
reading data of said similar pattern block from the reconstructed frame data according to said calculated displacement;
calculating differential data of said present block and said similar pattern block;
comparing an energy level of said differential data with an energy level of data of said present block and outputting mode data according to a coding mode set as a result of the comparison, the coding mode being set to a PCM mode if the energy level of said differential data is greater than the energy level of the data of said present block and being set to a DPCM mode if the energy level of said differential data is less than the energy level of the data of said present block;
coding one of said present block data and said differential data according to said set mode;
reconstructing said coded data; and
reconstructing said frame data by storing in regular sequence the block data obtained from said coded data at said reconstructing step and said similar pattern block data.

2. A coding method as claimed in claim 1, the method further comprising a step for, if the coding mode is set to the DPCM mode, combining the determined mode data and the calculated displacement data at said displacement calculating step into a data pack.

3. A coding method as claimed in claim 1 or 2, wherein said search area determining step determines the search area which is composed of blocks being closely adjacent to a present block among previously coded blocks in frame data.

4. A coding method as claimed in any of the preceding claims, wherein said present block data is coded in the case that said PCM mode is determined at said mode determining step, and said differential data is coded in the case that said DPCM mode is determined at said mode determining step.

5. A coding method as claimed in claim 4, wherein said step for reconstructing said frame data reconstructs the frame data by storing blocks sequentially when said PCM mode is determined at said mode determining step, or by storing data obtained by adding said differential data and said similar pattern block data when said DPCM mode is determined at said mode determining step.

6. A method for decoding data selectively coded with PCM or block DPCM in a still image or active image in an intra frame mode, the decoding method comprising the steps of:
receiving transmitted data coded by a method according to any of the preceding claims;
decoding said transmitted data to data of the spatial domain;
separating said transmitted coded data into mode data and displacement data;
reading the block data corresponding to said displacement data from the frame data obtained by a predetermined reconstructing step; and
reconstructing said frame data by sequentially storing the block data obtained from calculation of said decoded transmitted data and said read block data according to whether said mode data indicates that a given block has been coded by PCM or DPCM.

7. A decoding method as claimed in claim 6, wherein, in said step for separating said mode data, predetermined PCM mode data are output when said transmitted data are coded data of a block, and predetermined DPCM mode data are output when said transmitted data are differential data between a present block and a similar pattern block.

8. A decoding method as claimed in claim 7, wherein, in a step for calculation according to said mode data, said decoded transmitted data are output when said mode data is said PCM mode and said decoded transmitted data and the block data read from said frame data are added and output when said mode data is said DPCM mode.

9. A coder for dividing a frame into a plurality of blocks and coding data of the blocks, with coding of a still image or an active image in an intra frame mode, the coder characterized by:
a memory (37) for storing data in units of blocks, to thereby enable reconstruction of a present frame of data;
means (38) for determining a predetermined search area in said present frame of data;
means (39) for receiving present block data to be coded, estimating a most similar pattern block with a present block from previously input blocks within said search area of said present frame of data, and calculating a displacement obtained by said estimation;
a displacement compensation means (40) for reading data of said similar pattern block data from said memory (37) according to the displacement supplied from said displacement estimation means;
means (A3) for calculating differential data between said present block data for coding and the block data output from said displacement compensation means (40);
means (41) for determining a coding mode of transmitting data by comparing an energy level of said present block data with an energy level of said differential data, setting the coding mode to be a PCM mode if the energy level of said differential data is greater than the energy level of said present block data and setting the coding mode to a DPCM mode if the energy level of said differential data is less than the energy level of said present block data and outputting the determined mode data;
means (SW1, SW2) for selecting one of said present block data and said differential data according to the mode data from said mode determining means (41), and coding the selected one;
means (35, 36) for reconstructing data output from said coder into an original state before coding; and
a second adder (A2) for supplying the output data from said reconstructing means (35, 36), or data which are the result of adding the output data from said reconstructing means and the output data from said displacement compensation means, to said memory (37) in accordance with whether the mode determined by said mode determining means (41) indicates that a block has been coded with PCM or DPCM.

10. A coder as claimed in claim 9, wherein said search area determining means (38) determines a search area which is composed of blocks adjacent to a present block among previously coded blocks in the frame data which are stored in said memory (37) as a search area.

11. A coder as claimed in claim 9 or 10, further comprising a first adder (A1) at which said present block data for coding are applied to an input terminal and an output terminal is connected to an input terminal of coding means (32-34); and a first switch (SW1) which is turned on or off according to the output signal of said mode determining means (41), of which one terminal is connected to the output terminal of said displacement compensation means (40), and the other is connected to another input terminal of said first adder (A1).

12. A coder as claimed in claim 11, wherein said first switch (SW1) is turned off when the output signal of said mode determining means (41) is the PCM mode data, and turned on when it is the DPCM mode data.

13. A coder as claimed in any of claims 9 to 12, further comprising a second switch (SW2) which is turned on or off according to the output signal of said mode determining means (41), of which one terminal is connected to the output terminal of said displacement compensation means (40), and the other is connected to an input terminal of said second adder (A2).

14. A coder as claimed in claim 13, wherein said second switch (SW2) is turned off when the output signal of said mode determining means (41) is the PCM mode data, and turned on when it is the DPCM mode data.

15. A coder as claimed in any of claims 9 to 14, the device further comprising a mode-displacement data combiner (42) which combines the mode data output from said mode determining means (41) with displacement data output from said displacement estimation means (39) and sends mode-displacement data to a transmission channel.

16. A device for decoding data coded by block DPCM with a still image or active image in an intra frame mode, the decoder comprising:
an input terminal for receiving data coded by a coder according to any of claims 9 to 15;
means (51 - 53) for reconstructing the data applied from said input terminal to data of the spatial domain;
means (54) for separating transmitting data of the coder into mode data and displacement data, and outputting the same;
a memory (56) for storing previously decoded block data in a regular sequence and reconstructing the frame data;
a displacement compensation means (55) for reading the block data corresponding to said displacement data from the frame data of said memory (56); and
an adder (A1) for selectively adding the output data from said displacement compensation means, to the output data of said reconstructing means according to said mode data, and outputting the same to said memory.

17. A decoder as claimed in claim 16, wherein said mode-displacement data separator (54) outputs predetermined PCM mode data when said reconstructed data are obtained from data which code a block in said coder, and predetermined DPCM mode data when said reconstructed data are obtained from differential data between block data and data of a block with a most similar pattern.

18. A decoder as claimed in claim 16 or 17, further comprising a switch (SW) which is turned on or off according to said mode data, of which one terminal is connected to an output terminal of said displacement compensation means (55) and the other is connected to an input terminal of said adder (A1).

19. A decoder as claimed in claims 17 and 18, wherein said switch (SW) is turned off when an output signal of said mode-displacement separator (54) is the PCM mode data, and turned on when it is the DPCM mode data.

## Patentansprüche

1. Ein Codierungsverfahren zur Unterteilung eines Rahmens in eine Mehrzahl Blökke und Codierungsdaten der Blöcke mit Codierung von Stehbilddaten oder Daten eines aktiven Bildes in einem Intra-Rahmenmodus, wobei das Codierungsverfahren gekennzeichnet ist durch die Schritte:
Bestimmen eines vorbestimmten Suchbereichs in einer Anzahl bereits erhaltener Blöcke um einen gegenwärtigen Block herum in rekonstruierten Rahmendaten eines gegenwärtigen Rahmens;
Abschätzen, welcher Block der genannten Anzahl Blöcke in dem genannten Suchbereich mustermäßig dem genannten gegenwärtigen Block am ähnlichsten ist, und Berechnen einer Verschiebungsdate, die eine Verschiebung zwischen dem gegenwärtigen Block und dem ähnlichsten Block darstellt;
Lesen der Daten des genannten mustermäßig ähnlichen Blocks aus den rekonstruierten Rahmendaten gemäß der genannten berechneten Verschiebung;
Berechnen von Differenzdaten des genannten gegenwärtigen Blocks und des genannten mustermäßig ähnlichen Blocks;
Vergleichen eines Energiepegels der genannten Differenzdaten mit einem Energiepegel der Daten des genannten gegenwärtigen Blocks und Ausgeben einer Modusdate gemäß einem Codierungsmodus, der als Ergebnis des Vergleichs gesetzt wird, wobei der Codierungsmodus auf einen PCM (Impulscodemodulation) Modus versetzt wird, wenn der Energiepegel der genannten Differenzdaten größer als der Energiepegel der Daten des gegenwärtigen Blocks ist, und auf einen DPCM (Differenz-lmpulscodemodulation) Modus gesetzt wird, wenn der Energiepegel der genannten Differenzdaten geringer als der Energiepegel der Daten des genannten gegenwärtigen Blocks ist;
Codieren der Daten des genannten gegenwärtigen Blocks oder der genannten Differenzdaten gemäß dem genannten gesetzten Modus;
Rekonstruieren der genannten codierten Daten; und
Rekonstruieren der genannten Rahmendaten, indem in regulärer Folge die Blockdaten, die von den genannten codierten Daten bei dem genannten Rekonstruktionsschritt erhalten werden, und die genannten mustermäßig ähnlichen Blockdaten gespeichert werden.

2. Ein Codierungsverfahren, wie in Anspruch 1 beansprucht, wobei das Verfahren des weiteren einen Schritt umfaßt, wenn der Codierungsmodus auf den DPCM Modus gesetzt wird, die bestimmte Modusdate und die berechnete Verschiebungsdate bei dem genannten Verschiebungsberechnungsschritt zu einem Datenpaket zu kombinieren.

3. Ein Codierungsverfahren, wie in Anspruch 1 oder 2 beansprucht, wobei der genannte Suchbereichsbestimmungsschritt den Suchbereich bestimmt, der aus Blöcken zusammengesetzt ist, die einem gegenwärtigen Block unter vorhergehend codierten Blöcken in den Rahmendaten eng benachbart sind.

4. Ein Codierungsverfahren, wie in irgendeinem der vorhergehenden Ansprüche beansprucht, wobei die Daten des genannten gegenwärtigen Blocks in dem Fall codiert werden, daß der genannte PCM Modus bei dem genannten Modusbestimmungsschritt bestimmt wird, und die genannten Differenzdaten in dem Fall codiert werden, daß der genannte DPCM Modus bei dem genannten Modusbestimmungsschritt bestimmt wird.

5. Ein Codierungsverfahren, wie in Anspruch 4 beansprucht, wobei der genannte Schritt zur Rekonstruktion der genannten Rahmendaten die Rahmendaten rekonstruiert, indem Blöcke sequentiell gespeichert werden, wenn der genannte PCM Modus bei dem genannten Modusbestimmungsschritt bestimmt wird, oder indem Daten, die durch Addieren der genannten Differenzdaten und der Daten des genannten mustermäßig ähnlichen Blocks erhalten werden, gespeichert werden, wenn der genannte DPCM Modus bei dem genannten Modusbestimmungsschritt bestimmt wird.

6. Ein Verfahren zur Decodierung von Daten, die selektiv mit PCM oder Block DPCM in einem Stehbild oder aktivem Bild in einem Intra-Rahmenmodus codiert worden sind, wobei das Decodierungsverfahren die Schritte umfaßt.
Erhalten der übertragenen Daten, die durch ein Verfahren gemäß irgendeinem der vorhergehenden Ansprüche codiert worden sind;
Decodieren der genannten übertragenen Daten in Daten des Raumbereichs;
Trennen der genannten übertragenen codierten Daten in Modusdaten und Verschiebungsdaten;
Lesen der Blockdaten entsprechend der genannten Verschiebungsdate aus den Rahmendaten, die durch einen vorbestimmten Rekonstruktionsschritt erhalten worden sind; und
Rekonstruieren der genannten Rahmendaten, indem die Blockdaten sequentiell gespeichert werden, die aus Berechnung der genannten decodierten, übertragenen Daten und der genannten gelesenen Blockdaten erhalten werden, danach, ob die genannte Modusdate angibt, daß ein gegebener Block durch PCM oder DPCM codiert worden ist.

7. Ein Decodierungsverfahren, wie in Anspruch 6 beansprucht, wobei bei dem genannten Schritt zur Trennung der genannten Modusdate eine vorbestimmte PCM Modusdaten ausgegeben wird, wenn die genannten übertragenen Daten codierte Daten eines Blocks sind, und eine vorbestimmte DPCM Modusdate ausgegeben wird, wenn die genannten übertragenen Daten Differenzdaten zwischen einem gegenwärtigen Block und einem mustermäßig ähnlichen Block sind.

8. Ein Decodierungsverfahren, wie in Anspruch 7 beansprucht, wobei in einem Berechnungsschritt gemäß der genannten Modusdate die genannten decodierten, übertragenen Daten ausgegeben werden, wenn die genannte Modusdate der genannte PCM Modus ist, und die genannten decodierten, übertragenen Daten und die Blockdaten, die aus den genannten Rahmendaten gelesen wurden, addiert und ausgegeben werden, wenn die genannte Modusdate der genannte DPCM Modus ist.

9. Ein Codierer zur Unterteilung eines Rahmens in eine Mehrzahl Blöcke und Codierungsdaten der Blöcke mit Codierung eines Stehbilds oder eines aktiven Bilds in einem Intra-Rahmenmodus, wobei der Codierer **gekennzeichnet** ist, durch:
einen Speicher (37) zur Speicherung von Daten in Einheiten von Blöcken, um dadurch die Rekonstruktion eines gegenwärtigen Rahmens von Daten zu ermöglichen;
eine Einrichtung (38), um einen vorbestimmten Suchbereich in dem genannten gegenwärtigen Rahmen von Daten zu bestimmen;
eine Einrichtung (39), um Daten eines gegenwärtigen Blocks, die codiert werden sollen, zu erhalten, einen mustermäßig am ähnlichsten Block mit einem gegenwärtigen Block aus vorhergehend eingegebenen Blöcken innerhalb des genannten Suchbereichs des genannten gegenwärtigen Rahmens von Daten abzuschätzen und eine Verschiebung zu berechnen, die durch die genannte Abschätzung erhalten wird;
eine Verschiebungsausgleichseinrichtung (40), um Daten von den Daten des genannten mustermäßig ähnlichen Blocks aus dem genannten Speicher (37) gemäß der Verschiebung zu lesen, die von der genannten Verschiebungsabschätzeinheit zugeführt wird;
eine Einrichtung (A3), um Differenzdaten zwischen den Daten des genannten gegenwärtigen Blocks zur Codierung und den Blockdaten zu berechnen, die von der genannten Verschiebungsausgleichseinrichtung (40) ausgegeben werden;
eine Einrichtung (41), um einen Codierungsmodus der Übertragungsdaten zu bestimmen, indem ein Energiepegel der Daten des genannten gegenwärtigen Blocks mit einem Energiepegel der genannten Differenzdaten zun vergleichen, um den Codierungsmodus als einen PCM Modus zu setzen, wenn der Energiepegel der genannten Differenzdaten größer als der Energiepegel der Daten des genannten Blocks ist, und den Codierungsmodus auf einen DPCM Modus zu setzen, wenn der Energiepegel der genannten Differenzdaten geringer als der Energiepegel der genannten Daten des gegenwärtigen Blocks ist, und die bestimmte Modusdate auszugeben;
eine Einrichtung (SW1, SW2), um die Daten des genannten gegenwärtigen Blocks oder die genannten Differenzdaten gemäß der Modusdate von der genannten Modusbestimmungseinrichtung (41) auszuwählen und die ausgewählten zu codieren;
eine Einrichtung (35, 36), um von dem genannten Codierer ausgegebene Daten in einen ursprünglichen Zustand vor der Codierung zu rekonstruieren; und
einen zweiten Addierer (A2), um die Ausgangsdaten von der genannten Rekonstruktionseinrichtung (35, 36) oder die Daten, die das Ergebnis der Addition der Ausgangsdaten von der genannten Rekonstruktionseinrichtung und der Ausgangsdaten von der genannten Verschiebungsausgangseinrichtung sind, dem genannten Speicher (37) entsprechend danach zuzuführen, ob der Modus, der durch die genannte Modusbestimmungseinrichtung (41) bestimmt worden ist, angibt, daß ein Block mit PCM oder OPCM codiert worden ist.

10. Ein Codierer, wie in Anspruch 9 beansprucht, wobei die genannte Suchbereichsbestimmungseinrichtung (38) einen Suchbereich bestimmt, der aus Blöcken nahe einem gegenwärtigen Block unter vorhergehend codierten Blöcken in den Rahmendaten zusammengesetzt ist, die in dem genannten Speicher (37) als ein Suchbereich gespeichert sind.

11. Ein Codierer, wie in Anspruch 9 oder 10 beansprucht, der des weiteren einen ersten Addierer (A1), bei dem die Daten des genannten gegenwärtigen Blocks zur Codierung an eine Eingangsklemme gelegt werden und eine Ausgangsklemme mit einer Eingangsklemme einer Codierungseinrichtung (32-34) verbunden ist, und einen ersten Schalter (SW1) umfaßt, der gemäß dem Ausgangssignal der genannten Modusbestimmungseinrichtung (41) ein- oder ausgeschaltet wird und dessen eine Klemme mit der Ausgangsklemme der genannten Verschiebungsausgleichseinrichtung (40) verbunden ist und dessen andere Klemme mit einer anderen Eingangsklemme des genannten ersten Addierers (A1) verbunden ist.

12. Ein Codierer, wie in Anspruch 11 beansprucht, wobei der genannte erste Schalter (SW1) ausgeschaltet wird, wenn das Ausgangssignal der genannten Modusbestimmungseinrichtung (41) die PCM Modusdate ist, und eingeschaltet wird, wenn es die DPCM Modusdate ist.

13. Ein Codierer, wie in irgendeinem der Ansprüche 9 bis 12 beansprucht, der des weiteren einen zweiten Schalter (SW2) umfaßt, der gemäß dem Ausgangssignal der genannten Modusbestimmungseinrichtung (41) ein- oder ausgeschaltet wird, und dessen eine Klemme mit der Ausgangsklemme der genannten Verschiebungsausgleichseinrichtung (40) verbunden ist und dessen andere mit einer Eingangsklemme des genannten zweiten Addierers (A2) verbunden ist.

14. Ein Codierer, wie in Anspruch 13 beansprucht, wobei der genannte zweite Schalter (SW2) ausgeschaltet wird, wenn das Ausgangssignal der genannten Modusbestimmungseinrichtung (41) die PCM Modusdate ist, und eingeschaltet wird, wenn es die DPCM Modusdate ist.

15. Ein Codierer, wie in irgendeinem der Ansprüche 9 bis 14 beansprucht, wobei die Einrichtung des weiteren eine Modus-Verschiebungsdatenkombinationseinrichtung (42) umfaßt, die die Modusdate, die von der Modusbestimmungseinrichtung (41) ausgegeben wird, mit der Verschiebungsdate kombiniert, die von der genannten Verschiebungsabschätzeinrichtung (39) ausgegeben wird, und die Modus-Verschiebungsdate zu einem Übertragungskanal schickt.

16. Eine Einrichtung zur Decodierung von Daten, die durch Block DPCM bei einem Stehbild oder einem aktiven Bild in Intra-Rahmenmodus codiert worden sind, wobei der Decodierer umfaßt:
ein Eingangsklemme, um Daten zu erhalten, die durch einen Codierer gemäß irgendeinem der Ansprüche 9 bis 15 codiert worden sind;
eine Einrichtung (51-53), um die von der genannten Eingangsklemme angewendeten Daten in Daten des räumlichen Bereichs zu rekonstruieren;
eine Einrichtung (54), um übertragene Daten des Codierers in Modusdate und Verschiebungsdate zu trennen und diese auszugeben;
einen Speicher (56), um vorhergehend decodierte Daten eines Blocks in einer regulären Folge zu speichem und die Rahmendaten zu rekonstruieren;
eine Verschiebungsausgleichseinrichtung (55), um die Daten des Blocks entsprechend der genannten Verschiebungsdate aus den Rahmendaten des genannten Speichers (56) zu lesen; und
einen Addierer (A1), um selektiv die Ausgangsdate von der genannten Verschiebungsausgleichseinrichtung zu den Ausgangsdaten der genannten Rekonstruktionseinrichtung gemäß der genannten Modusdate zu addieren und diese zu dem genannten Speicher auszugeben.

17. Ein Codierer, wie in Anspruch 16 beansprucht, wobei die genannte Modus-Verschiebungsdatentrenneinrichtung (54) eine vorbestimmte PCM Modusdate ausgibt, wenn die genannten rekonstruierten Daten von Daten erhalten werden, die einen Block in dem genannten Codierer codieren, und eine vorbestimmte DPCM Modusdate, wenn die genannten rekonstruierten Daten von Differenzdaten zwischen den Blockdaten und Daten eines Blocks mit dem am ähnlichsten Muster erhalten werden.

18. Ein Decodiere, wie in Anspruch 16 oder 17 beansprucht, der des weiteren einen Schalter (SW) umfaßt, der gemäß der genannten Modusdate ein- oder ausgeschaltet wird und dessen eine Klemme mit einer Ausgangsklemme der genannten Verschiebungsausgleichseinrichtung (55) verbunden ist und dessen andere mit einer Eingangsklemme des genannten Addierers (A1) verbunden ist.

19. Ein Decodierer, wie in Anspruch 17 und 18 beansprucht, wobei der genannte Schalter (SW) ausgeschaltet wird, wenn ein Ausgangssignal der genannten Modus-Verschiebungstrenneinrichtung (54) die PCM Modusdate ist, und eingeschaltet wird, wenn es die DPCM Modusdate ist.

## Revendications

1. Procédé de codage pour diviser une trame en une pluralité de blocs et de données de codage des blocs, avec un codage de données d'image fixe ou des données d'image active dans un mode intra trame, le procédé de codage étant caractérisé par les étapes suivantes :
on détermine une zone de recherche prédéterminée parmi un certain nombre de blocs déjà reçus autour d'un présent bloc dans des données de trame reconstruites d'une présente trame;
on estime quel bloc parmi ledit nombre de blocs dans ladite zone de recherche est le plus analogue en motifs audit présent bloc et on calcule des données de déplacement représentant un déplacement entre le présent bloc et le bloc le plus analogue;
on lit des données dudit bloc de motifs analogue, à partir de données de trame reconstruites d'après ledit déplacement calculé ;
on calcule des données différentielles dudit présent bloc et dudit bloc de motifs analogue;
on compare un niveau d'énergie desdites données différentielles avec un niveau d'énergie des données dudit présent bloc et on émet des données de mode d'après un mode de codage établi suite à la comparaison, le mode de codage étant établi à un mode PCM si le niveau d'énergie desdites données différentielles est supérieur au niveau d'énergie des données dudit présent bloc et étant établi à un mode DPCM si le niveau d'énergie desdites données différentielles est inférieur au niveau d'énergie des données dudit présent bloc;
on code l'une desdites données de présent bloc et desdites données différentielles selon ledit mode établi;
on reconstruit lesdites données codées; et
on reconstruit lesdites données de trame par stockage en séquence régulière des données de bloc obtenues à partir desdites données codées à ladite étape de reconstruction et desdites données de bloc de motifs analogues.

2. Procédé de codage selon la revendication 1, le procédé comprenant en outre une étape pour, si le mode de codage est établi au mode DPCM, effectuer la combinaison, en un paquet de données, des données de mode déterminées et des données de déplacement calculées à ladite étape de calcul de déplacement.

3. Procédé de codage selon la revendication 1 ou 2, dans lequel ladite étape de détermination de zone de recherche détermine la zone de recherche qui est constituée de blocs intimement adjacents à un présent bloc parmi les blocs codés au préalable dans des données de trame.

4. Procédé de codage selon l'une quelconque des revendications précédentes, dans lequel lesdites présentes données de bloc sont codées dans le cas où ledit mode PCM est déterminé à ladite étape de détermination de mode et lesdites données différentielles sont codées dans le cas où ledit mode DPCM est déterminé à ladite étape de détermination de mode.

5. Procédé de codage selon la revendication 4, dans lequel ladite étape de reconstruction desdites données de trame reconstruit les données de trame par stockage séquentiel de blocs lorsque ledit mode PCM est déterminé à ladite étape de détermination de mode, ou en stockant des données obtenues par addition desdites données différentielles et desdites données de bloc de motif analogue lorsque ledit mode DPCM est déterminé à ladite étape de détermination de mode.

6. Procédé de décodage de données sélectivement codées avec PCM ou DPCM en blocs dans une image fixe ou une image active dans un mode intra trame, procédé de décodage comprenant les étapes suivantes :
on reçoit des données émises codées par un procédé selon l'une quelconque des revendications précédentes;
on décode lesdites données émises en des données du domaine spatial;
on sépare lesdites données codées émises en données de mode et données de déplacement;
on lit les données de bloc correspondant auxdites données de déplacement à partir des données de trame obtenues par un étape de reconstruction prédéterminée; et
on reconstruit lesdites données de trame par stockage séquentiel des données bloc obtenues à partir du calcul desdites données émises décodées et desdites données de bloc lues, selon que lesdites données de bloc indiquent qu'un bloc données a été codé par PCM ou DPCM.

7. Procédé de décodage selon la revendication 6, dans lequel, à ladite étape de séparation desdites données de mode, des données de mode PCM prédéterminées sont émises lorsque lesdites données émises sont des données codées d'un bloc et des données de mode DPCM prédéterminées sont engendrées en sortie lorsque lesdites données émises sont des données différentielles entre un présent bloc et un bloc de motif analogue.

8. Procédé de décodage selon la revendication 7, dans lequel, à une étape de calcul selon lesdites données de mode, lesdites données émises décodées sont engendrées en sortie lorsque lesdites données de mode sont ledit mode PCM et lesdites données émises décodées et les données de bloc lues à partir desdites données de trame sont ajoutées et émises lorsque lesdites données de mode sont ledit mode DPCM.

9. Codeur pour diviser une trame en une pluralité de blocs et coder des données des blocs avec un codage d'une image fixe ou d'une image active dans un mode intra trame, le codeur étant caractérisé par :
une mémoire (37) pour stocker des données en unités de blocs pour permettre de ce fait la reconstruction d'une présente trame de données;
des moyens (38) pour déterminer une zone de recherche prédéterminée dans ladite présente trame de données;
des moyens (39) pour recevoir des données de présent bloc devant être codés, estimer un bloc de motif le plus analogue à un présent bloc à partir des blocs entrés au préalable dans ladite zone de recherche de ladite présente trame de données, et calculer un déplacement obtenu par ladite estimation;
des moyens de compensation de déplacement (40) pour lire desdites données de bloc de motifs analogues à partir de ladite mémoire (37) d'après le déplacement fourni par lesdits moyens d'estimation de déplacement;
des moyens (A3) pour calculer des données différentielles entre lesdites données de présent bloc pour le codage et les données de bloc émises par lesdits moyens de compensation de déplacement (40);
des moyens (41) pour déterminer un mode de codage de transmission de données par comparaison d'un niveau d'énergie desdites données de présent bloc avec un niveau d'énergie desdites données différentielles, pour établir le mode de codage comme étant un mode PCM si le niveau d'énergie desdites données différentielles est supérieur au niveau d'énergie desdites données de présent bloc, et établir le mode de codage à un mode DPCM si le niveau d'énergie desdites données différentielles est inférieur au niveau d'énergie desdites données de présent bloc et produire en sortie les données de mode déterminées;
des moyens (SW1, SW2) pour sélectionner l'une des données de présent bloc et lesdites données différentielles selon les données de mode à partir desdits moyens de détermination de mode (41) et coder celles qui sont sélectionnées;
des moyens (35, 36) pour reconstruire des données émises par ledit codeur à un état d'origine avant le codage; et
un deuxième additionneur (A2) pour fournir les données émises provenant desdits moyens de reconstruction (35, 36) ou des données qui sont le résultat de l'addition des données de sortie provenant desdits moyens de reconstruction et des données de sortie provenant desdits moyens de compensation de déplacement, à ladite mémoire (37), selon que le mode déterminé par lesdits moyens de détermination de mode (41) indique qu'un bloc a été codé avec PCM ou bien avec DPCM.

10. Codeur selon la revendication 9, dans lequel lesdits moyens de détermination de zone de recherche (38) déterminent une zone de recherche qui est constituée de blocs adjacents à un présent bloc, parmi des blocs codés au préalable dans les données de trame qui sont stockées dans ladite mémoire (37), sous la forme d'une zone de recherche.

11. Codeur selon la revendication 9 ou 10, comprenant en outre un premier additionneur (A1) auquel lesdites données de présent bloc pour le codage sont appliquées à une borne d'entrée et une borne de sortie est reliée à une borne d'entrée de moyens de codage (32 à 34), et un premier commutateur (SW1) qui est mis en service ou hors service d'après le signal de sortie dudit moyen de détermination de mode (41), dont une borne est reliée à la borne de sortie desdits moyens de compensation de déplacement (40) et l'autre est reliée à une autre borne d'entrée dudit premier additionneur (A1).

12. Codeur selon la revendication 11, dans lequel ledit premier commutateur (SW1) est mis hors service lorsque le signal de sortie desdits moyens de détermination de mode (41) est constitué des données de mode PCM, et mis en service lorsqu'il est constitué des données de mode DPCM.

13. Codeur selon l'une quelconque des revendications 9 à 12, comprenant en outre un deuxième commutateur (SW2) qui est mis en service ou hors service d'après le signal de sortie desdits moyens de détermination de mode (41), dont une borne est connectée à la borne de sortie desdits moyens de compensation de déplacement (40) et l'autre est connectée à une borne d'entrée dudit deuxième additionneur (A2).

14. Codeur selon la revendication 13, dans lequel ledit deuxième commutateur (SW2) est mis hors service lorsque le signal de sortie desdits moyens de détermination de mode (41) est constitué des données de mode PCM, et mis en service lorsqu'il est constitué des données de mode DPCM.

15. Codeur selon l'une quelconque des revendications 9 à 14, le dispositif comprenant en outre un circuit de combinaison de données de mode-déplacement (42) qui combine les données de mode émises par lesdits moyens de détermination de mode (41) avec des données de déplacement émises par lesdits moyens d'estimation de déplacement (39) et envoient les données de mode-déplacement à un canal de transmission.

16. Dispositif pour décoder des données codées par un bloc DPCM avec une image fixe ou une image active dans un mode intra trame, le décodeur comprenant :
une borne d'entrée pour recevoir les données codées par un codeur selon l'une quelconque des revendications 9 à 15;
des moyens (51 à 53) pour reconstruire les données appliquées par ladite borne d'entrée en données du domaine spatial;
des moyens (54) pour séparer des données d'émission du codeur en données de mode et données de déplacement, et les envoyer;
une mémoire (56) pour stocker des données de bloc décodées au préalable dans une séquence régulière et reconstruire les données de trame;
des moyens de compensation de déplacement (55) pour lire les données de bloc correspondant auxdites données de déplacement à partir des données de trame de ladite mémoire (56); et
un additionneur A1 pour ajouter sélectivement les données de sortie, provenant desdits moyens de compensation de déplacement, aux données de sortie desdits moyens de reconstruction d'après lesdites données de mode, et les envoyer à ladite mémoire.

17. Décodeur selon la revendication 16, dans lequel ledit séparateur de données de mode-déplacement (54) envoie des données de mode PCM prédéterminées lorsque lesdites données reconstruites sont obtenues à partir de données qui codent un bloc dans ledit codeur, et des données de mode DPCM prédéterminées lorsque lesdites données reconstruites sont obtenues à partir de données différentielles entre des données de bloc et des données d'un bloc ayant le motif le plus analogue.

18. Décodeur selon la revendication 16 ou 17 comprenant en outre un commutateur SW qui est mis en service ou hors service d'après lesdites données de mode dont une borne est reliée à une bande de sortie desdits moyens de compensation de déplacement (55) et l'autre est reliée à une borne d'entrée dudit additionneur (A1).

19. Décodeur selon les revendications 17 et 18, dans lequel ledit commutateur (SW) est mis hors service lorsqu'un signal de sortie dudit séparateur de mode-déplacement (54) est constitué des données de mode PCM, et mis en service lorsqu'il constitué des données de mode DPCM.
